**Europäisches Patentamt**

**European Patent Office**

**Office européen des brevets**

(19)

(11) Veröffentlichungsnummer : **0 577 830 B1**

(12) # EUROPÄISCHE PATENTSCHRIFT

(45) Veröffentlichungstag der Patentschrift :
06.12.95 Patentblatt 95/49

(51) Int. Cl.⁶ : **F16D 3/223**

(21) Anmeldenummer : **93917361.3**

(22) Anmeldetag : **04.02.93**

(86) Internationale Anmeldenummer :
**PCT/EP93/00253**

(87) Internationale Veröffentlichungsnummer :
**WO 93/16296 19.08.93 Gazette 93/20**

(54) **KUGELGLEICHLAUFDREHGELENK MIT KÄFIGSICHERUNGSELEMENTEN.**

(30) Priorität : **05.02.92 DE 4203195**

(43) Veröffentlichungstag der Anmeldung :
**12.01.94 Patentblatt 94/02**

(45) Bekanntmachung des Hinweises auf die
Patenterteilung :
**06.12.95 Patentblatt 95/49**

(84) Benannte Vertragsstaaten :
**DE ES FR GB IT**

(56) Entgegenhaltungen :
**DE-B- 2 522 670**
**DE-B- 2 527 376**
**DE-U- 8 709 767**
**GB-A- 2 127 132**

(73) Patentinhaber : **GKN Automotive AG**
**Hauptstrasse 150**
**D-53797 Lohmar (DE)**

(72) Erfinder : **KRUDE, Werner**
**Pfarrer-Stauff-Strasse**
**D-53819 Neunkirchen-Wolperath (DE)**
Erfinder : **HARZ, Peter**
**Steinbruchstrasse 14**
**D-53773 Hennef 41 (DE)**

(74) Vertreter : **Neumann, Ernst Dieter, Dipl.-Ing. et al**
**Harwardt Neumann Patent- und Rechtsanwälte,**
**Postfach 14 55**
**D-53704 Siegburg (DE)**

**Beschreibung**

Die Erfindung betrifft ein Kugelgleichlaufdrehgelenk mit einem Gelenkaußenteil mit im wesentlichen längs verlaufenden umfangsverteilten Kugelbahnen, einem Gelenkinnenteil mit im wesentlichen längs verlaufenden umfangsverteilten vorzugsweise hinterschnittfreien Kugelbahnen, wobei sich die Bahnen paarweise radial gegenüberliegen und jeweils gemeinsam eine drehmomentübertragende Kugel aufnehmen, sowie einem Käfig, der in umfangsverteilten Fenstern die Kugeln aufnimmt, in einer gemeinsamen Ebene hält und beim Abbeugen der Achsen von Gelenkaußenteil und Gelenkinnenteil zueinander die Kugeln auf die winkelhalbierende Ebene führt, wobei das Gelenkaußenteil mit in einer Axialrichtung betrachtet hinterschnittfreien inneren Oberflächen zwischen den einzelnen Kugelbahnen hergestellt ist und wobei zumindest drei Sicherungselemente für den Käfig im Gelenkaußenteil jeweils zwischen zwei Kugelbahnen eingesetzt und mit dem Gelenkaußenteil verbunden sind, die Käfiganlage- bzw Käfigführungsflächen bilden, die einer axialen Bewegung des Käfigs aus dem Gelenkaußenteil heraus entgegenwirken, wobei die Kugeln sich zwischen den Sicherungselementen hindurch bewegen können.

Der Gegenstand der Erfindung ist auf verschiednene Formen der Kugelgleichlaufdrehgelenke anzuwenden, insbesondere auf die sogenannten RF-Gelenke (Rzeppa-Festgelenke) und die sogenannten UF-Gelenke (Undercut-Free-Gelenke). Gelenke dieser Art sind in F. Schmelz u. a. "Gelenke und Gelenkwellen: Berechnung, Gestaltung, Anwendungen", Berlin, Heidelberg, New York 1988 unter diesen Bezeichnungen beschrieben, bei denen die Steuerung des Käfigs nicht oder nicht ausschließlich durch die Form der Käfigführungsflächen, sondern in erster Linie durch die Form der Kugelbahnen im Gelenkaußenteil und im Gelenkinnenteil bewirkt werden, deren Mittellinien voneinander abweichen, jedoch symmetrisch zu einer durch die Kugelmitten definierten Ebene bei gestrecktem Gelenk verlaufen.

Ein Gelenk der vorstehend genannten Art ist aus der DE 32 33 753 C 2 bekannt. Die Sicherungselemente sind hierbei als nahezu radial in das Gelenkaußenteil eingedrehte Schrauben ausgebildet. Sowohl die Vorbereitung für die Aufnahme der genannten Sicherungsmittel als auch die Spieleinstellung ist kosten- und zeitaufwendig. Da das Gelenkaußenteil ausreichend Material zur Aufnahme der Sicherungsmittel aufweisen muß, ist eine relativ große axiale Länge des Gelenkaußenteils bezogen auf die Ebene durch die Kugelmitten bei gestrecktem Gelenk erforderlich, die zu einer Beschränkung des Gelenkbeugewinkels im Hinblick auf den möglichen Freigang der Anschlußwelle bei Abbeugung des Gelenks führt.

Ein Gelenk der genannten Art ist weiter aus der DE 24 30 027 B1 bekannt. Hierbei sind die Sicherungsmittel axial eingesetzt und gemeinsam durch einen in eine Ringnut im Gelenkaußenteil eingesetzten Sicherungsring gesichert. Der Sicherungsring behindert den möglichen Kugelweg in den Bahnen im Gelenkaußenteil, so daß ein beschränkter Beugewinkel des Gelenks hinzunehmen ist. In gleicher Weise behindert der Sicherungring den Beugewinkel im Hinblick auf den möglichen Freigang der Anschlußwelle bei Gelenkbeugung. Der Käfig stützt sich hierbei auf der Gelenkinnenseite im Außenteil an federnd gehaltenen weiteren Anschlagmitteln ab. Eine derartige Lösung ist beim Auftreten größerer Schubkräfte am Gelenk, das als Festgelenk wirken soll, ungeeignet, da die Gelenkfunktion eines axial festliegenenden Gelenkmittelpunktes hierbei nicht erfüllt wird.

Ein Gelenk ähnlicher Art ist weiterhin aus der DE-OS 36 26 998 A 1 bekannt. Hierbei ist als Sicherungselement ausschließlich ein in eine Innennut im Gelenkaußenteil eingesetzter Sicherungsring vorgesehen. Eine Spieleinstellung am Käfig zum Ausgleich von Führungstoleranzen ist hiermit nicht möglich. Durch den nach Montage des Gelenkinnenteils mit dem Käfig und den Kugeln als Einheit eingesetzten Sicherungsring im Gelenkaußenteil wird wiederum jedoch der Nachteil eingekauft, daß der Beugewinkel des beschriebenen Gelenkes erheblich eingeschränkt wird. Zum einen wird der Weg der Kugeln in den Bahnen durch den eingesetzten Sicherungsring begrenzt, zum anderen bildet der Sicherungsring einen Anschlag für eine dem Gelenkinnenteil zugeordnete Welle.

Ein weiteres Gelenk ähnlicher Art ist aus der DE 25 22 670 B1 bekannt. Hierbei ist als Sicherungselement ausschließlich ein stirnseitig auf das Gelenkaußenteil aufgelegter Ringkörper mit einzelnen nach innen verformten Zungen vorgesehen, der seinerseits durch eine Blechkappe gehalten wird. Der Ringkörper beschränkt den Beugewinkel des Gelenkes wiederum dadurch, daß er einen Anschlag für eine dem Gelenkinnenteil zugeordnete Welle bei Abbeugung bildet. Da der Ring notwendigerweise vorgeformt sein muß, ist eine axiale Spieleinstellung nicht möglich. Die einzelnen Zungen sind nicht geeignet, größere axiale Zugkräfte aufzufangen, so daß die Funktion des Gelenks als Festgelenk mit einem fixierten Gelenkmittelpunkt nicht gegeben ist.

Der Erfindung liegt die Aufgabe zugrunde, ein Gelenk der genannten Art zu schaffen, bei dem der maximale Beugewinkel durch die Sicherungsmittel für den Käfig nicht beeinflußt wird und die Sicherungsmittel zur Einstellung des Axialspiels am Käfig genutzt werden können. Die Lösung hierfür besteht darin, daß die Sicherungselemente voneinander unabhängige axial in den Ringspalt zwischen Gelenkaußenteil und Außenoberfläche des Käfigs eingesetzte mit dem Gelenkaußenteil verschweißte Keile sind, die den Käfig über Kontaktstellen A mit eingestelltem axialen Spiel im Gelenkaußenteil halten. Bei einem Gelenk mit beispielsweise sechs

2

Kugeln können drei Sicherungselemente mit jeweils zwei dazwischenliegenden Kugelbahnen gleichmäßig umfangsverteilt angeordnet sein.

Hierbei ist es in vorteilhafter Weise möglich, den Käfig vor der Montage der Sicherungselemente mit koaxial zur Achse des Gelenkaußenteils liegender Achse in das Gelenkaußenteil einzuführen und danach die Sicherungselemente ins Gelenkaußenteil einzubringen und mit diesem zu verbinden. Das komplizierte Einfädeln des Käfigs in das Gelenkaußenteil kann hiermit entfallen. Das Gelenkinnenteil kann hierbei wie zuvor erläutert bereits mit dem Käfig vormontiert sein und gleichzeitig mit diesem koaxial in das Gelenkaußenteil eingeführt werden. Bei axial zur Öffnung des Gelenkaußenteils hin hinterschnittfreien Bahnen können auch die Kugeln bereits zu einer Montagegruppe mit dem Käfig und dem Gelenkinnenteil vormontiert sein, die insgesamt axial in das Gelenkaußenteil eingeführt wird. Gleichzeitig kann das gesamte Gelenk durch die Montageart axial spielfrei oder mit vorgegebenem geringen Spiel unabhängig von den Fertigungstoleranzen eingestellt werden.

In bevorzugter Ausgestaltung ist vorgesehen, daß die Krümmungsradien der Bahnen einen axialen Offset gegenüber einer Ebene $E_K$ durch die Kugelmitten bei gestrecktem Gelenk haben, wobei der Offset $O_1$ des Gelenkinnenteils zulässigerweise abweichend von dem Offset $O_2$ des Gelenkaußenteils sein kann. Hiermit erfolgt die Steuerung des Käfigs bei Gelenkbeugung in erster Linie über die Kugelbahnen und Kugeln, so daß der Käfig relativ leicht und mit gleichmäßiger Wandstärke ausgeführt werden kann.

Eine erste Variante der Erfindung besteht darin, daß die innere Oberfläche zwischen den Bahnen im Gelenkaußenteil Käfiganlage- bzw. Käfigführungsflächen bildet, gegen die sich der Käfig an Kontaktstellen E axial nach innen im Gelenkaußenteil abstützt. Dies stellt eine besonders einfache Form der axialen Sicherung des Käfigs dar. Wie bereits beschrieben, können die Sicherungselemente unmittelbar im Anschlag mit dem Käfig befindlich eingeschweißt werden oder nach dem Einstellen eines geringen Axialspiels, nachdem zuvor durch den axialen Anschlag am Käfig eine Bezugsstellung gefunden worden ist.

In weiterer Ausgestaltung der zuvor genannten Variante kann sich das Gelenkinnenteil axial nach innen im Gelenkaußenteil über seine Außenoberfläche an der Innenoberfläche des Käfigs und damit mittelbar über den Käfig und axial nach außen im Gelenkaußenteil über seine Bahnen an den Kugeln und damit mittelbar über die Kugeln und den Käfig und über die Sicherungselemente abstützen.

Abweichend vom vorstehenden kann sich das Gelenkinnenteil axial nach innen und nach außen im Gelenkaußenteil jeweils über seine Außenoberfläche an der Innenoberfläche des Käfigs und damit mittelbar nur über den Käfig und die Sicherungselemente abstützen. Hiermit entfällt die Abstützung über die Käfigfenster.

Ungeachtet der genannten Form der axialen Abstützung sollen hierbei die Kugeln bei spielfrei im Gelenkaußenteil gehaltenem Käfig nahezu radial spielfrei in den Bahnen im Gelenkaußenteil und im Gelenkinnenteil gehalten sein.

Um nach der Fixierung des Käfigs, d.h. nach dem Einschieben und Befestigen der Sicherungselemente Kantenträger zu vermeiden, ist es vorzusehen, daß die Mittelpunkte $M_1$, $M_2$ der Käfiganlage- bzw. Käfigführungsflächen an den Sicherungselementen und im Gelenkaußenteil gegenüber einer Ebene durch die Kugelmitten bei gestrecktem Gelenk entgegengesetzt axial versetzt sind und ihre Radien $R_1$, $R_2$ jeweils größer sind als der Radius R der Außenoberfläche des Käfigs.

Eine zweite Variante der genannten Erfindung zeichnet sich dadurch aus, daß die innere Oberfläche zwischen den Bahnen im Gelenkaußenteil ein radiales Spiel $S_3$ gegenüber der Außenoberfläche des Käfigs aufweist, daß die Innenoberfläche des Käfigs mit zwischen den Bahnen liegenden äußeren Oberflächen des Gelenkinnenteils an Kontaktstellen D in Kontakt steht und daß sich der Käfig über die Käfigfenster an Kontaktstellen B auf den zur Öffnung des Gelenkaußenteils gelegenen Flanken axial nach innen an den Kugeln abstützt, die sich ihrerseits an Kontaktstellen $C_1$, $C_2$ in den Bahnen des Gelenkaußenteils und des Gelenkinnenteils abstützen.

Auch hierbei kann die Montage wie oben erläutert bis zur Herstellung einer vollkommenen axialen Spielfreiheit führen oder zur Einstellung eines gewünschten Axialspiels genutzt werden, wobei auch hier zunächst das Axialspiel auf null gesetzt wird, um eine Bezugsstellung zu finden. Bei axialer Spielfreiheit entsteht zugleich eine radiale Spielfreiheit der Kugeln, da die Abstützung ein Anlegen der Kugeln in den Bahnen bedingt.

Dieser Kontakt der Kugeln mit den Bahnen kann am Bahngrund erfolgen. Je nach Bahnquerschnittsform ist jedoch auch ein doppelter Kugelkontakt an den Flanken der jeweiligen Bahnen möglich.

In weiterer Ausführung dieser Variante kann vorgesehen sein, daß zwischen der Innenoberfläche des Käfigs und der Außenoberfläche des Gelenkinnenteils auf der zur Öffnung des Gelenkaußenteils gelegenen Seite ein radiales Spiel S1 vorgesehen ist. Weiterhin kann vorgesehen sein, daß bei Anlage der Kugeln an den Kontaktstellen $C_1$, $C_2$ in den Bahnen und an den Kontaktstellen B in den Käfigfenstern ein axiales Spiel $S_2$ gegenüber den zur Innenseite des Gelenkaußenteils gegelegenen Flanken der Käfigfenster herrscht. Hiermit können die unbearbeitet bleibenden Flächenteile am Gelenkinnenteil und am Käfig erhöht werden. Nach einer für beide der genannten Varianten günstigen Weiterbildung kann die Innenoberfläche des Gelenkaußenteils zwischen den Kugelbahnen im Bereich einer Ebene durch die Kugelmitten bei gestrecktem Gelenk über diese Ebene hinaus ins Innere des Gelenkaußenteils gerichtet einen innenzylindrischen Abschnitt aufweisen. Hierdurch kann ein radiales Auswandern des Käfigs bei der zuvor bereits mehrfach beschriebenen axialen Montage entgegengewirkt werden, indem sich der Käfig an dieser innenzylindrischen Fläche anlegt. Weiterhin kann unter Drehmomentbelastung eine Tendenz zum Verformen des Gelenkaußenteils dadurch begrenzt werden, daß sich das Gelenkaußenteil über die genannte innenzylindrische Fläche am Käfig abstützt.

Nach der bevorzugten Ausführungsform sind die Kugelbahnen im Gelenkaußenteil und im Gelenkinnenteil von der Öffnungsseite des Gelenkaußenteils betrachtet axial hinterschnittfrei, so daß sich der genannte Vorteil bei der Montage ergibt, daß auch die Kugeln bereits mit Gelenkinnenteil und Käfig vormontiert sein können und diese Montagegruppe axial in das Gelenkaußenteil vor der abschließenden Montage der Sicherungselemente eingeführt werden können. Da sich die Länge der Fenster des Käfigs in Umfangsrichtung betrachtet nach dem Weg der Kugeln relativ zum Käfig bei gebeugtem Gelenk bestimmt, der mit dem Beugungswinkel zunimmt, ist es bei einem Gelenk gemäß der Erfindung möglich, die Länge der Fenster in Umfangsrichtung zu beschränken. Die Länge der Fenster in Umfangsrichtung muß also nur dem Weg entsprechen, den die Kugeln bezüglich des Käfigs in Umfangsrichtung ausführen, wenn das Gelenk unter dem Betriebswinkel gebeugt umläuft. Ein mehrfaches Abwinkeln der Achsen von Gelenkinnenteil und Gelenkaußenteil bis zu einem Montagewinkel, bei dem jeweils ein Käfigfenster frei aus dem Gelenkaußenteil austritt, damit jeweils eine Kugel radial eingesetzt werden kann, entfällt hiermit.

Aufgrund der Einzelausführung der Sicherungselemente ist ein Spielausgleich gegenüber dem Käfig möglich, bei dem die axiale Sicherung einzeln und unabhängig voneinander eingestellt werden kann, so daß auch ein gleichmäßiges Tragen zwischen der Oberfläche der Sicherungselemente und der Außenoberfläche des Käfigs zustande kommt.

Nach einer günstigen Ausführung stellen die Sicherungselemente einfache Keile dar, die in einer ringförmigen Oberfläche des Gelenkaußenteils eingeführt werden, mit dem zuvor eingesetzten Käfig in Anschlag gebracht werden und ggfs. vor dem Verbinden mit dem Gelenkaußenteil um das einzustellende Axialspiel zurückgezogen werden. Die dem Käfig zugewandte innere Fläche der Keile kann dabei eine Innenwölbung oder eine Innenkeilform aufweisen, um einen Kontakt mit dem außen sphärischen Käfig herzustellen.

Um die Montage zu erleichtern, können in einer weiteren Ausgestaltung im Gelenkaußenteil innen Taschen oder Ausnehmungen ausgebildet sein, in die die Sicherungselemente in Umfangsrichtung formschlüssig eingreifen. Auf diese Weise ist die Umfangslage der Sicherungselemente bei der Montage leichter einzuhalten.

In einer weiterhin vorteilhaften Ausführung sind die Ausnehmungen so ausgestaltet, daß die Sicherungselemente vor dem Verbinden mit dem Gelenkaußenteil axial und/oder radial geführt in diesem verschiebbar sind. Als bevorzugte Ausführungsformen hierzu sind unter einem Winkel zur Achse geneigte Längsnuten im Gelenkaußenteil zu verstehen, wobei die Sicherungselemente, wie bereits vorher beschrieben, keilförmig ausgeführt sein können.

Nach einer besonders günstigen Ausgestaltung ist das Gelenkaußenteil als Blechformteil mit im wesentlichen konstanten Wandstärken hergestellt. Hierbei ist es besonders günstig, wenn ein derartig im Tiefziehverfahren herstellbares Teil axial vollkommen hinterschnittfrei ist, wobei dann die einzelnen eingeschweißten axialen Sicherungselemente den Käfig axial abstützen.

Bevorzugte Ausführungsbeispiele werden nachstehend anhand der Zeichungen dargestellt.

Fig. 1        zeigt ein erfindungsgemäßes Gelenk in einer ersten Ausführung in axialer Ansicht,

Fig. 2        zeigt ein Gelenk nach Fig. 1 im Längsschnitt,

Fig. 2a        zeigt eine vergrößerte Einzelheit eines Gelenks nach Fig. 2

Fig. 3        zeigt ein erfindungsgemäßes Sicherungselement in einer ersten Ausführung nach Fig. 1 in axialer Ansicht,

Fig. 4        zeigt ein Sicherungselement nach Fig. 3 im Längsschnitt durch das Gelenk,

Fig. 5        zeigt ein erfindungsgemäßes Sicherungselement in einer zweiten Ausführung in axialer Ansicht,

Fig. 6        zeigt ein Sicherungselement nach Fig. 5 im Längsschnitt durch das Gelenk,

Fig. 7        zeigt ein erfindungsgemäßes Sicherungselement in einer dritten Ausführung in axialer Ansicht,

Fig. 8        zeigt ein Sicherungselement nach Fig. 7 im Längsschnitt durch das Gelenk,

Fig. 9        zeigt ein erfindungsgemäßes Sicherungselement in einer vierten Ausführung in axialer Ansicht,

Fig. 10        zeigt ein Sicherungselement nach Fig. 9 im Längsschnitt durch das Gelenk,

Fig. 11        zeigt ein erfindungsgemäßes Sicherungselement in einer fünften Ausführung in axialer Ansicht,

Fig. 12        zeigt ein Sicherungselement nach Fig. 11 im Längsschnitt durch das Gelenk,

Fig. 13        zeigt ein erfindungsgemäßes Sicherungselement in einer sechsten Ausführung in axialer Ansicht,

Fig. 14        zeigt ein Sicherungselement nach Fig. 13 im Längsschnitt durch das Gelenk,

Fig. 15        zeigt ein erfindungsgemäßes Sicherungselement in einer siebten Ausführung in axialer Ansicht,

Fig. 16      zeigt ein Sicherungselement nach Fig. 15 im Längsschnitt durch das Gelenk,

Fig. 17      zeigt ein erfindungsgemäßes Gelenk in einer zweiten Ausführung in axialer Ansicht,

Fig. 18      zeigt ein Gelenk nach Fig. 17 im Längsschnitt,

Fig. 19      zeigt ein erfindungsgemäßes Gelenk als Blechformteil in axialer Ansicht,

Fig. 20      zeigt ein Gelenk nach Fig. 18 im Längsschnitt.

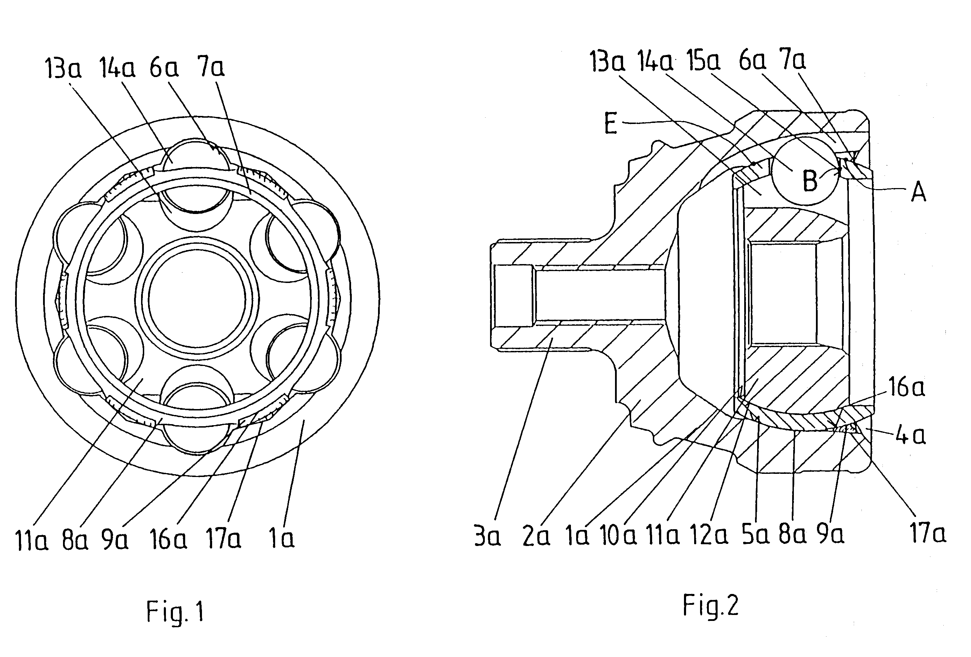

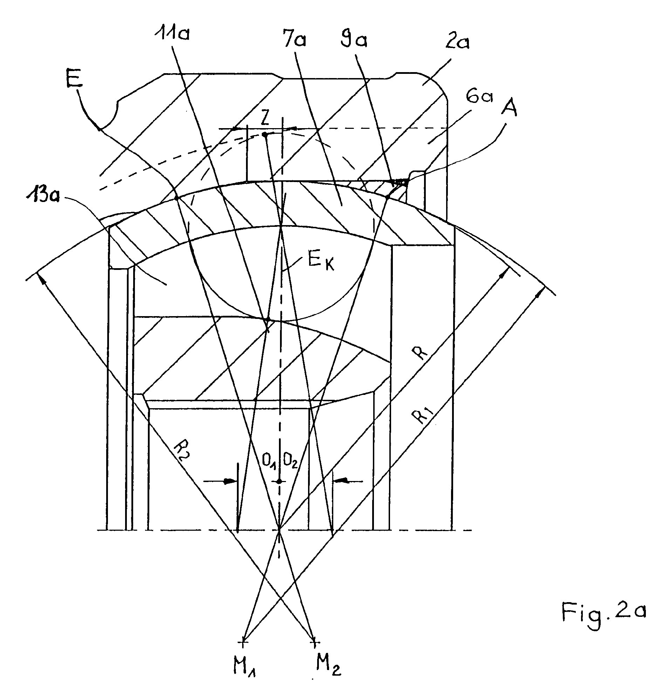

In den Figuren 1 und 2 ist jeweils ein Gelenk mit einem Gelenkaußenteil 1a gezeigt, das einerseits durch einen Gelenkboden 2a, an den sich ein Zapfen 3a anschließt, abgeschlossen ist und auf der gegenüberliegenden Seite eine Öffnung 4a aufweist. Die Innenoberfläche 5a des Gelenkaußenteils 1a ist von der Öffnung 4a aus betrachtet axial hinterschnittfrei, das gleiche gilt für die umfangsverteilten Kugelbahnen 6a. In das Gelenkaußenteil 1a ist ein Käfig 7a mit sphärischer Außenoberfläche 8a eingeführt, der sich in Axialrichtung nach innen an der Innenoberfläche 5a des Gelenkaußenteils an Kontaktstellen E abstützt und axial nach außen an einzelnen Sicherungselementen 9a, die noch näher beschrieben werden, an Kontaktstellen A. Der Käfig hat eine sphärische Innenoberfläche 10a, in der ein Gelenkinnenteil 11a mit kugelabschnittsförmiger Außenoberfläche 12a geführt ist. Im Gelenkinnenteil 11a sind weiterhin längsverlaufende Bahnen 13a ausgeführt, die in axialer Richtung von der Öffnung aus gesehen ebenfalls hinterschnittfrei sind. In den Bahnen 6a, 13a sind Kugeln 14a gehalten, die sich in axialer Richtung an Fenstern 15a im Käfig abstützen. Die einzelnen Sicherungselemente 9a sind in keilförmige Führungsnuten 17a im Gelenkaußenteil eingesetzt und weisen eine kugelige Innenoberfläche 16a auf. Die Achse der Keilnuten ist zur Längsachse des Gelenkaußenteils geneigt, so daß bei axialer Verschiebung der Sicherungselemente in den Führungsnuten zugleich eine radiale Annäherung an den Käfig erfolgt. Wie in der Ansicht angedeutet, sind die Sicherungselemente mit dem Gelenkaußenteil mittels einer Schweißnaht verbunden. Im Längsschnitt ist eine vordere Fase zu erkennen, die zumindest in Übereinstimmung mit der entsprechenden Fase der Öffnung des Gelenkaußenteils gebracht wird.

In Figur 2a sind in vergröÄerter Darstellung das Gelenkaußenteil 1a, das Gelenkinnenteil 11a, der Käfig 7a sowie eines der Sicherungselemente 9a im Längsschnitt gezeigt. Der Käfig hat in den Punkten E und A Kontakt mit dem Gelenkaußenteil bzw. dem Sicherungselement. Es ist erkennbar, daß die Mittelpunkte $M_1$, $M_2$ der sphärischen Käfiganlage- bzw. Käfigführungsflächen des Sicherungselementes 9a und des Außenteils 2a gegenüber einer Ebene durch die Kugelmitten $E_K$ bei gestrecktem Gelenk axial in entgegengesetzten Richtungen versetzt sind und daß weiterhin die Krümmungsradien $R_1$, $R_2$ der genannten sphärischen Flächen etwa gleich groß sind und um einiges größer gegenüber dem Radius R der Außenoberfläche des Käfigs 7a. Weiterhin ist angedeutet, daß die Innenoberfläche des Gelenkaußenteils 2a von der Ebene $E_k$ durch die Kugelmitten bei gestrecktem Gelenk zur Gelenkinnenseite hin über einen Abschnitt Z zylindrisch ausgebildet ist. Aufgrund der vorgegebenen Hinterschnittfreiheit des Gelenkaußenteils setzt sich diese innenzylindrische Fläche zur Außenseite des Gelenkaußenteils mit zumindest gleichem Durchmesser fort.

Mit $O_1$ ist der sogenannte Offset, d.h. der Axialabstand des hier nicht näher bezeichneten Mittelpunkts des Krümmungsradius der Bahnen 13a im Gelenkinnenteil gegenüber der Gelenkmitte d.h. einer Ebene $E_K$ durch die Kugelmitten bezeichnet, mit $O_2$ ensprechend der davon gegebenenfalls abweichende Offset des nicht näher bezeichneten Mittelpunkts des Krümmungsradius der Bahnen 6a im Gelenkaußenteil gegenüber der Gelenkmitte, nämlich der Ebene $E_K$ durch die Kugelmitten bei gestrecktem Gelenk.

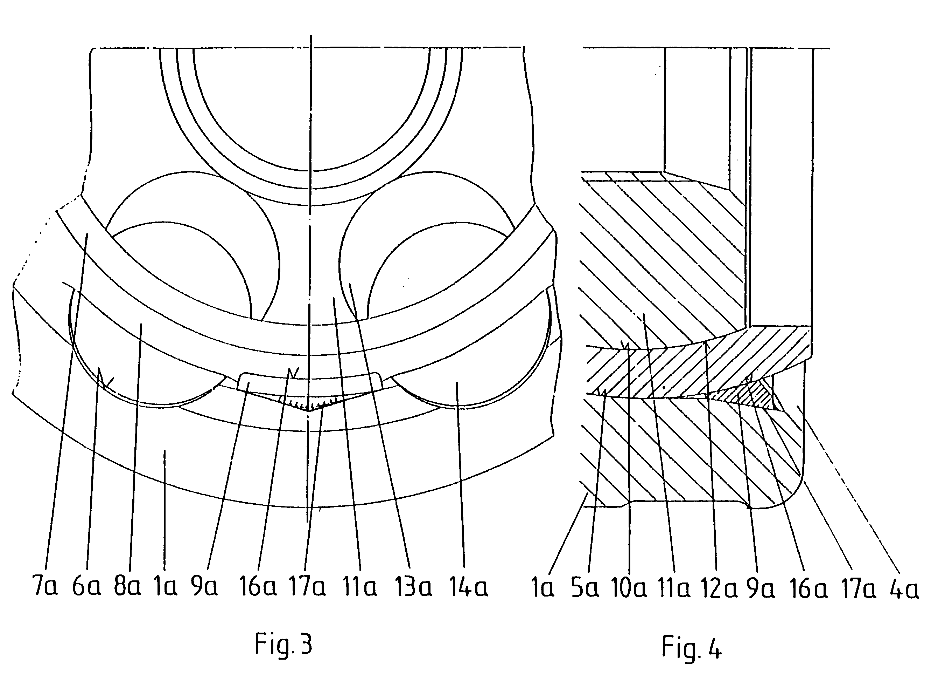

In den Figuren 3 und 4 sind die gleichen Einzelheiten wie in den Figuren 1 und 2 vergrößert dargestellt und mit gleichen Ziffern bezeichnet.

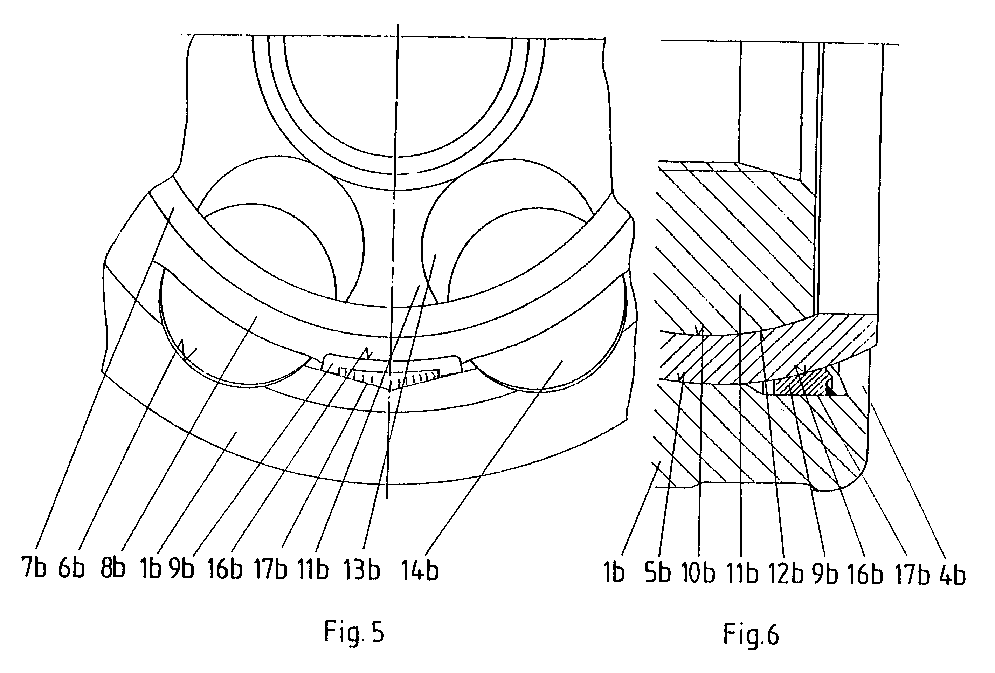

In den Figuren 5 und 6 sind entsprechende Einzelheiten gegenüber den Figuren 3 und 4 mit den gleichen Ziffern und dem Index "b" bezeichnet. Die im Querschnitt keilförmigen Nuten 17b haben hier abweichend im Längsschnitt gesehen in Bezug auf ihre Berührungsfläche mit dem Sicherungselement 9b einen achsparallelen Verlauf.

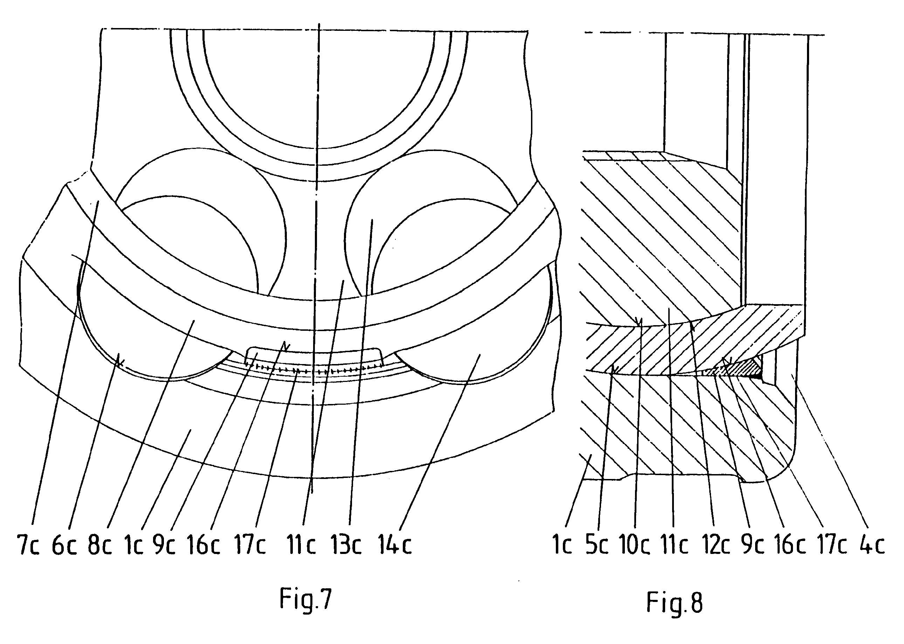

In den Figuren 7 und 8 sind entsprechende Teile gegenüber den Figuren 3 und 4 mit den gleichen Ziffern und dem Index "c" bezeichnet. Wie in Figur 8 erkennbar, ist auf die Ausbildung einer besonderen Führungsnut für die Sicherungselemente 9c hier verzichtet worden. Insofern ist in Umfangsrichtung auch keine Führung für die Sicherungselemente gegeben. Dafür kann auf spanende Bearbeitungsschritte am Gelenkaußenteil verzichtet werden.

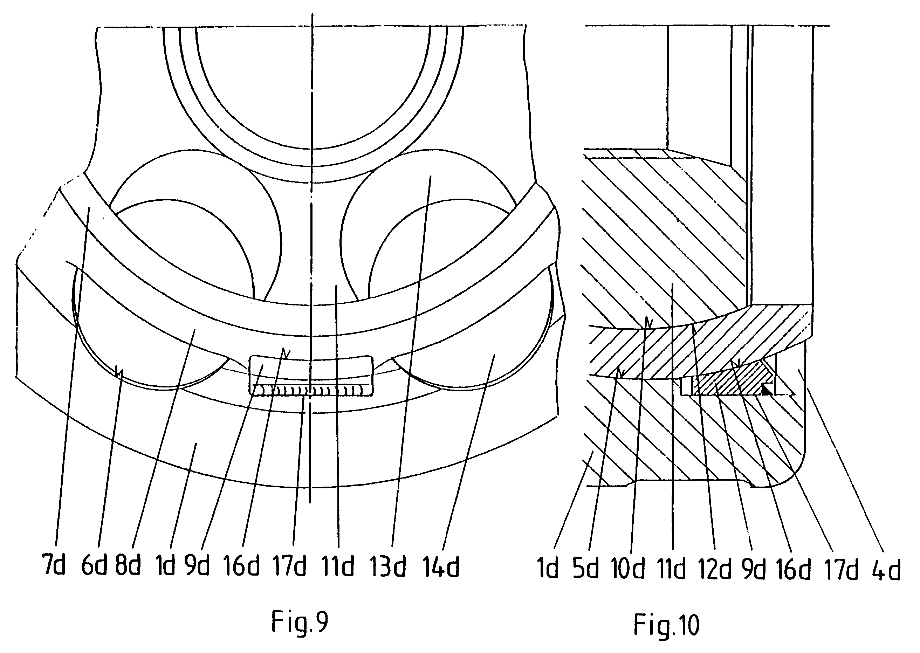

In den Figuren 9 und 10 sind entsprechende Einzelheiten im Vergleich mit den Figuren 3 und 4 mit den gleichen Ziffern und dem Index "d" versehen. Wie in der Ansicht nach Figur 9 zu erkennen ist, ist die Führungsnut 17d für die Sicherungselemente 9d mit Rechteckquerschnitt ausgeführt, die Nut ist wie im Längsschnitt erkennbar analog der in Figur 4 mit achsparallelem Verlauf hergestellt.

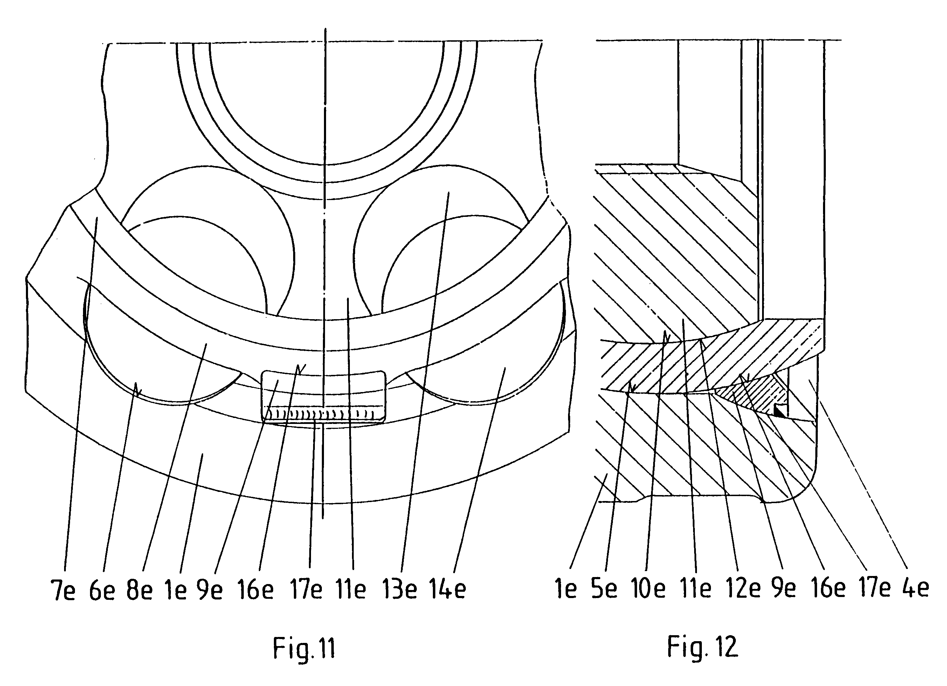

In den Figuren 11 und 12 sind entsprechende Einzelheiten im Vergleich mit den Figuren 3 und 4 mit den gleichen Ziffern und dem Index "e" versehen. Abweichend davon ist eine Führungsnut 17e von rechteckigem Querschnitt gezeigt, die im Längsschnitt gemäß Fig. 12 einen Kreisbogen beschreibt. Das Sicherungselement 9e nähert sich hierdurch bei Axialverschiebung zugleich radial an den Käfig 7e an.

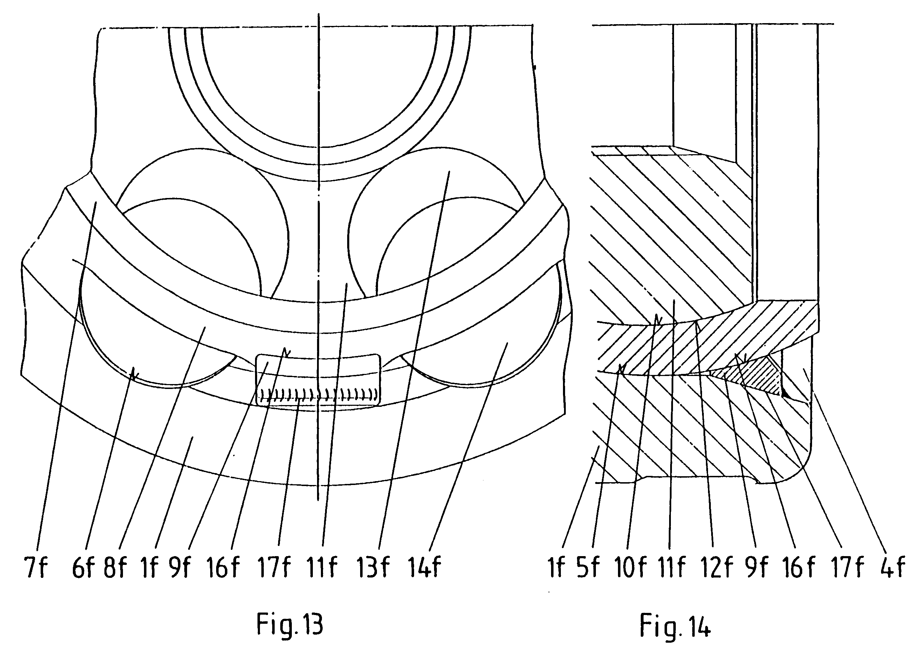

In den Figuren 13 und 14 sind entsprechende Einzelheiten im Vergleich mit den Figuren 3 und 4 mit den gleichen Ziffern und dem Index "f" versehen. Abweichend davon ist eine Nut 17f von rechteckigem Querschnitt gezeigt, deren Achse und damit deren Grund wie in Figur 14 erkennbar, unter einem Winkel auf die Mittelachse des Gelenks zuläuft. Das Sicherungselement 9f nähert sich hierdurch bei Axialverschiebung zugleich radial an den Käfig 7f an.

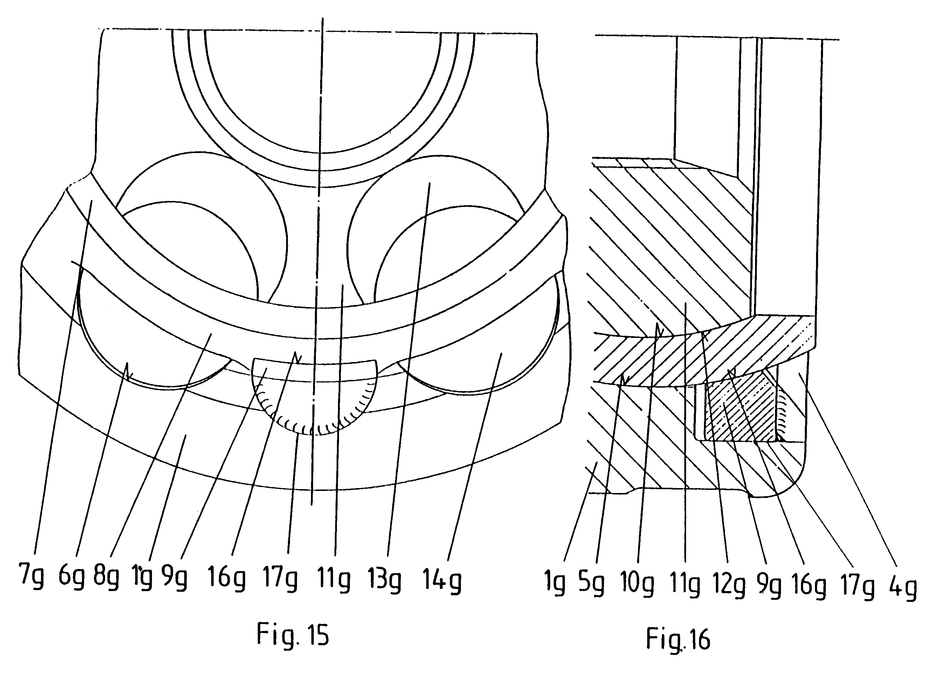

In den Figuren 15 und 16 sind entsprechende Einzelheiten im Vergleich mit den Figuren 3 und 4 mit den gleichen Ziffern und dem Index "g" versehen. In Figur 15 ist das Sicherungselement 9g in eine im Querschnitt kreisförmig begrenzte Führungsnut 17g eingefügt, deren Achse parallel zur Gelenkachse ist. Wie in Fig. 16 erkennbar, ist die axiale Länge der Führungsnut so groß, daß das Sicherungselement zum Spielausgleich mit seiner an den Käfig 7g angepaßten innenliegende Oberfläche eingeschoben werden kann.

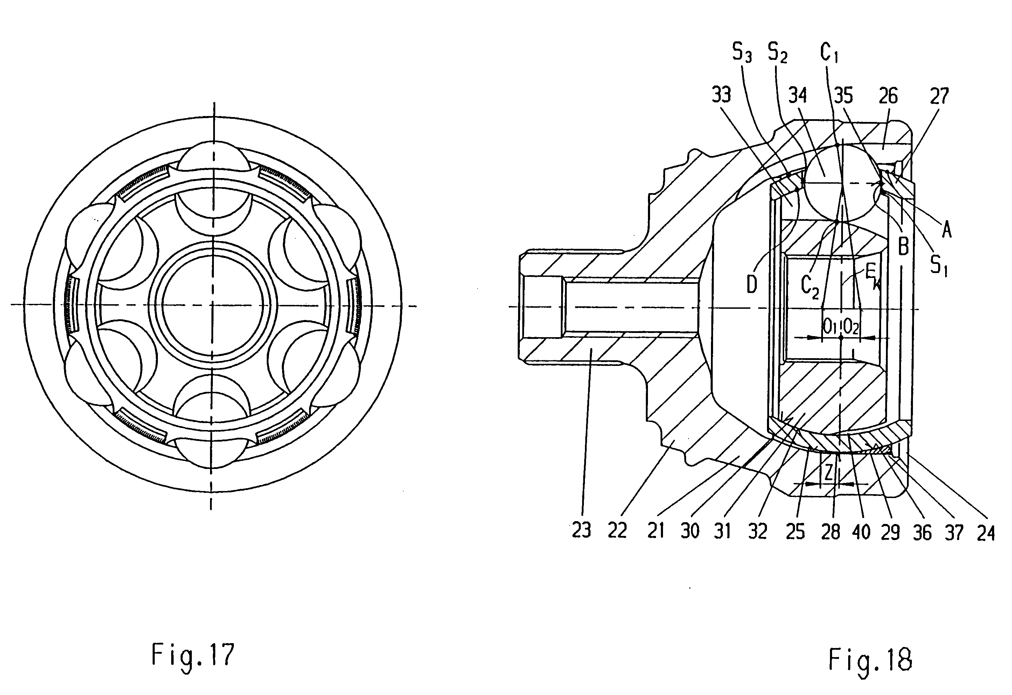

In den Figuren 17 und 18 ist ein gegenüber den Figuren 1 und 2 geringfügig abgewandeltes Gelenk gezeigt, wobei entsprechende Teile mit um 20 heraufgesetzten Bezugsziffern versehen sind. Abweichend davon hat das Gelenkinnenteil 31 einen teilweise überdrehten Bereich, der einen Ringspalt 40 zwischen der Oberfläche 32 des Gelenkinnenteils 31 und der innenkugeligen Fläche 30 des Käfigs 27 erzeugt, so daß ein radiales Spiel S1 entsteht. Die kugelige Außenfläche 28 des Käfigs ist kontaktfrei gegenüber der hinterschnittfreien Innenoberfläche 25 des Gelenkaußenteils 21 gehalten, wobei sich ein radiales Spiel $S_3$ ergibt. Ein gleitender Kontakt findet auf der Außenoberfläche 28 des Käfigs 27 ausschließlich gegenüber den Sicherungselementen 29 an den Kontaktstellen A statt. Die Abstützung des Käfigs 27 gegenüber dem Gelenkaußenteil 21 nach axial innen erfolgt mittelbar über die außenkugelige Außenfläche 32 des Gelenkinnenteils im Kontaktpunkt D, die Käfigfenster 35 an den Kontaktstellen B an den Kugeln 34 und die Kugeln 34, die sich in den Bahnen 26 und 33 des Gelenkaußenteils und des Gelenkinnenteils in den Kontaktstellen $C_1$, $C_2$ abstützen. Bei Anlage der Kugeln 34 in den Kontaktstellen B der Käfigfenster entsteht auf der Gegenseite ein Spiel $S_2$.

Mit $O_1$ ist der sogenannte Offset, d.h. der Axialabstand des hier nicht näher bezeichneten Mittelpunkts des Krümmungsradius der Bahnen 33 im Gelenkinnenteil gegenüber der Gelenkmitte d.h. einer Ebene $E_K$ durch die Kugelmitten bezeichnet, mit $O_2$ ensprechend der davon gegebenenfalls abweichende Offset des nicht näher bezeichneten Mittelpunkts des Krümmungsradius der Bahnen 26 im Gelenkaußenteil gegenüber der Gelenkmitte, nämlich der Ebene $E_K$ durch die Kugelmitten bei gestrecktem Gelenk.

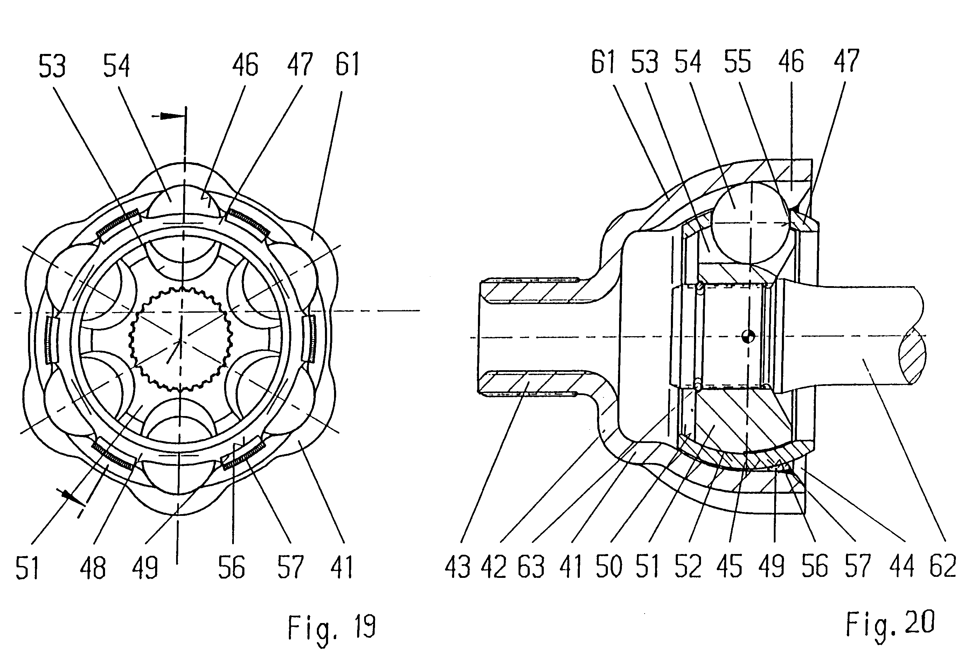

In den Figuren 19 und 20 ist ein Gelenk gezeigt, das im wesentlichen mit den in den Figuren 1 und 2 gezeigten übereinstimmt, wobei die in den Fig. 17 und 18 gezeigten Verhältnisse der Führung des Käfigs angewandt sind. Die Bezugsziffern einander entsprechender Teile sind gegenüber den Figuren 1 und 2 jeweils um 40 heraufgesetzt. Als weitere Abweichung gegenüber dem Gelenk nach den Figuren 17 und 18 ist das Gelenkaußenteil 41 als Tiefziehteil mit im wesentlichen gleichbleibender Wandstärke hergestellt, wobei die Bahnen 46 im Gelenkaußenteil durch radiale Ausprägungen 61 erzeugt sind. In das Gelenkinnenteil 51 ist hierbei eine Welle 62 eingesetzt und mittels eines Sicherungsringes 63 axial festgelegt.

Bezugszeichenliste

| | |
|---|---|
| 1, 21, 41 | Gelenkaußenteil |
| 2, 22, 42 | Gelenkboden |
| 3, 23, 43 | Wellenzapfen |
| 4, 24, 44 | Gelenköffnung |
| 5, 25, 45 | Innenoberfläche (Gelenkaußenteil) |
| 6, 26, 46 | Kugelbahn (Gelenkaußenteil) |
| 7, 27, 47 | Käfig |
| 8, 28, 48 | Außenoberfläche Käfig |
| 9, 29, 49 | Sicherungselement (Keil) |
| 10, 30, 50 | Innenoberfläche Käfig |
| 11, 31, 51 | Gelenkinnenteil |
| 12, 32, 52 | Außenoberfläche (Gelenkinnenteil) |
| 13, 33, 53 | Kugelbahn (Gelenkinnenteil) |
| 14, 34, 54 | Kugel |
| 15, 35, 55 | Käfigfenster |
| 16, 36, 56 | Anlagefläche (Sicherungselement) |
| 17, 37, 57 | Führungsnut für Sicherungselement |
| 18 | Bohrung |
| 19 | Sicherungslement (Stopfen) |
| 40, 60 | Ringspalt |
| 61 | Ausprägung |
| 62 | Anschlußwelle |
| 63 | Sicherungsring |

**Patentansprüche**

1. Kugelgleichlaufdrehgelenk mit einem Gelenkaußenteil (1, 21, 41) mit im wesentlichen längs verlaufenden umfangsverteilten Kugelbahnen (6, 26, 46), einem Gelenkinnenteil (11, 31, 51) mit im wesentlichen längs verlaufenden umfangsverteilten, vorzugsweise hinterschnittfreien Kugelbahnen (13, 33, 53), wobei sich die Bahnen paarweise radial gegenüberliegen und jeweils gemeinsam eine drehmomentübertragende Kugel (14, 34, 54) aufnehmen, sowie einem Käfig (7, 27, 47), der in umfangsverteilten Fenstern (15, 35, 55) die Kugeln aufnimmt, in einer gemeinsamen Ebene hält und beim Abbeugen der Achsen von Gelenkaußenteil und Gelenkinnenteil zueinander die Kugeln auf die winkelhalbierende Ebene führt, wobei das Gelenkaußenteil (1, 21, 41) mit in einer Axialrichtung betrachtet hinterschnittfreien inneren Oberflächen (5, 25, 45) zwischen den einzelnen Kugelbahnen (13, 33, 53) hergestellt ist und wobei zumindest drei Sicherungselemente (9, 19, 29, 49) für den Käfig (7, 27, 47) im Gelenkaußenteil (1, 21, 41) jeweils zwischen zwei Kugelbahnen eingesetzt und mit dem Gelenkaußenteil verbunden sind, die Käfiganlage- bzw. Käfigführungsflächen (16, 36, 56) bilden, die einer axialen Bewegung des Käfigs (7, 27, 47) aus dem Gelenkaußenteil (1, 21, 41) heraus entgegenwirken, wobei die Kugeln sich zwischen den Sicherungselementen hindurch bewegen können.
dadurch gekennzeichnet,
daß die Sicherungselemente axial in den Ringspalt zwischen Gelenkaußenteil (1,21,41) und Außenoberfläche (8,28,48) des Käfigs (7,27,47) voneinander unabhängige eingesetzte mit dem Gelenkaußenteil (1,21,41) verschweißte Keile sind, die den Käfig (7,27,47) über Kontaktstellen A mit eingestelltem axialen Spiel im Gelenkaußenteil (1,21,41) halten.

2.	Gelenk nach Anspruch 1,
dadurch gekennzeichnet,
daß die Krümmungsradien der Bahnen (6,26,46,13,33,53) einen axialen Offset gegenüber einer Ebene $E_K$ durch die Kugelmitten bei gestrecktem Gelenk haben, wobei der Offset $O_1$ des Gelenkinnenteils (11,31,51) zulässigerweise abweichend von dem Offset $O_2$ des Gelenkaußenteils (1,21,41) sein kann.

3.	Gelenk nach Anspruch 1 oder 2,
dadurch gekennzeichnet,
daß die innere Oberfläche (5) zwischen den Bahnen (6) im Gelenkaußenteil (1) Käfiganlage- bzw. Käfigführungsflächen bildet, gegen die sich der Käfig (7) an Kontaktstellen E axial nach innen im Gelenkaußenteil (1) abstützt. (Fig. 1 bis 16).

4.	Gelenk nach Anspruch 3,
dadurch gekennzeichnet,
daß sich das Gelenkinnenteil (11) axial nach innen im Gelenkaußenteil (1) über seine Außenoberfläche (12) an der Innenoberfläche (10) des Käfigs (7) und axial nach außen im Gelenkaußenteil (1) über seine Bahnen (6,13) an den Kugeln (14) und damit mittelbar über Kugeln und Käfig und über die Sicherungselemente (9) abstützt.

5.	Gelenk nach Anspruch 3,
dadurch gekennzeichnet,
daß sich das Gelenkinnenteil (11) axial nach innen und nach außen im Gelenkaußenteil (1) jeweils über seine Außenoberfläche (12) an der Innenoberfläche (10) des Käfigs (7) und damit mittelbar über den Käfig abstützt.

6.	Gelenk nach einem der Ansprüche 3 bis 5,
dadurch gekennzeichnet,
daß die Kugeln (14) bei spielfrei im Gelenkaußenteil (1) gehaltenem Käfig (7) nahezu radial spielfrei in den Bahnen (6,13) im Gelenkaußenteil (1) und im Gelenkinnenteil (11) gehalten sind.

7.	Gelenk nach einem der Ansprüche 3 bis 6,
dadurch gekennzeichnet,
daß die Mittelpunkte $M_1$, $M_2$ der Käfiganlage- bzw. Käfigführungsflächen (16,5) an den Sicherungselementen (9) und im Gelenkaußenteil (1) gegenüber einer Ebene durch die Kugelmitten bei gestrecktem Gelenk entgegengesetzt axial versetzt sind und ihre Radien $R_1$, $R_2$ jeweils größer sind als der Radius R der Außenoberfläche (8) des Käfigs (7).

8.	Gelenk nach Anspruch 1 oder 2,
dadurch gekennzeichnet,
daß die innere Oberfläche (25, 45) zwischen den Bahnen (26, 46) im Gelenkaußenteil (21, 41) ein radiales Spiel $S_3$ gegenüber der Außenoberfläche (28, 48) des Käfigs (27, 47) aufweist, daß die Innenoberfläche (30, 50) des Käfigs (27, 47) mit zwischen den Bahnen (33, 53) liegenden äußeren Oberflächen (32, 52) des Gelenkinnenteils (31, 51) an Kontaktstellen D in Kontakt steht und daß sich der Käfig (27, 47) über die Käfigfenster (35,55) an Kontaktstellen B auf den zur Öffnung (24,44) des Gelenkaußenteils (21,41) gelegenen Flanken axial nach innen an den Kugeln (35,54) abstützt, die sich ihrerseits an Kontaktstellen $C_1$,$C_2$ in den Bahnen des Gelenkaußenteils (21,41) und des Gelenkinnenteils (31,51) abstützen. (Fig. 17 bis 20).

9.	Gelenk nach Anspruch 8,
dadurch gekennzeichnet,
daß zwischen der Innenoberfläche (30,50) des Käfigs (27,47) und der Außenoberfläche (32,52) des Gelenkinnenteils (31,51) auf der zur Öffnung (24,44) des Gelenkaußenteils (21,41) gelegenen Seite ein radiales Spiel S1 vorgesehen ist.

**10.** Gelenk nach einem der Ansprüche 8 oder 9,
dadurch gekennzeichnet,
daß bei Anlage der Kugeln (34,54) an den Kontaktstellen $C_1$, $C_2$ in den Bahnen (26,46,33,53) und an den Kontaktpunkten B auf den zur Öffnung (24,44) des Gelenkaußenteils (21,41) gelegenen Flanken der Käfigfenster (35,55) ein axiales Spiel $S_2$ gegenüber den zur Innenseite des Gelenkaußenteil (21,41) gelegenen Flanken der Käfigfenster (35,55) herrscht.

**11.** Gelenk nach einem der Ansprüche 1 bis 10,
dadurch gekennzeichnet,
daß die Innenoberfläche (5,25,45) des Gelenkaußenteils (1,21,41) im Bereich einer Ebene $E_K$ durch die Kugelmitten bei gestrecktem Gelenk über diese Ebene hinaus ins Innere des Gelenkaußenteils (1,21,41) gerichtet, einen innenzylindrischen Abschnitt Z aufweist.

**12.** Gelenk nach einem der Ansprüche 1 bis 10,
dadurch gekennzeichnet,
daß im Gelenkaußenteil (1, 21, 41) Ausnehmungen (17, 18, 37, 57) ausgebildet sind, in die die Sicherungselemente (9, 19, 29, 49) in Umfangsrichtung formschlüssig eingreifen.

**13.** Gelenk nach Anspruch 12,
dadurch gekennzeichnet,
daß die Ausnehmungen (17, 18, 27, 57) darin ein axiales und/oder radiales Verschieben der Sicherungselemente (9, 19, 29, 49) vor dem Verbinden der Sicherungselemente (9, 19, 29, 49) mit dem Gelenkaußenteil (1, 21, 41) zulassen.

**14.** Gelenk nach einem der Ansprüche 1 bis 13,
dadurch gekennzeichnet,
daß der Radius der Käfiganlage- bzw. Käfigführungsflächen (16, 36, 56) der Sicherungselemente (9, 29, 49) größer ist als der Radius der Außenoberfläche (8,28, 48) des Käfigs (7,27, 47), insbesondere unendlich groß.

**15.** Gelenk nach einem der Ansprüche 1 bis 14,
dadurch gekennzeichnet,
daß das Gelenkaußenteil (41) ein Blechformteil mit im wesentlichen konstanter Wandstärke ist.

**16.** Verfahren zur Herstellung eines Gelenks nach einem der Ansprüche 1 bis 15,
dadurch gekennzeichnet,
daß eine vormontierte Anordnung aus Gelenkinnenteil (11,31,51), Käfig (7,27,47) und Kugeln (14,34,54) in bestimmungsgemäßer Position mit zueinander koaxialen Achsen koaxial in das Gelenkaußenteil (1,21,41) eingeführt wird und anschließend die Sicherungselemente (9,29,49) eingesetzt und mit dem Gelenkaußenteil (1,21,41) verschweißt werden.

**17.** Verfahren nach Anspruch 16,
dadurch gekennzeichnet,
daß die Sicherungselemente (9,29,49) bei axial gehaltenem Gelenkaußenteil (1,21,41) gegen den Käfig (7,27,47), der sich unmittelbar oder mittelbar am Gelenkaußenteil (1,21,41) abstützt, axial zum Anschlag gebracht werden und in dieser Position mit dem Gelenkaußenteil (1,21,41) verschweißt werden.

**18.** Verfahren nach Anspruch 16,
dadurch gekennzeichnet,
daß die Sicherungselemente (9,29,49) bei axial gehaltenem Gelenkaußenteil (1,21,41) gegen den Käfig (7,27,47), der sich unmittelbar oder mittelbar am Gelenkaußenteil (1,21,41) abstützt, axial zum Anschlag gebracht werden, um einen definierten Betrag, gegenüber dem axial gehaltenen Gelenkaußenteil (1,21,41) axial zurückgezogen werden, und in dieser Position mit dem Gelenkaußenteil (1,21,41) verschweißt werden.

## Claims

1. A constant velocity universal ball joint having an outer joint part (1, 21, 41) with substantially longitudinally extending circumferentially distributed ball tracks (6, 26, 46), an inner joint part (11, 31, 51) with substantially longitudinally extending circumferentially distributed preferably undercut-free ball tracks (13, 33, 53), with the tracks being arranged in pairs and positioned radially opposite one another and jointly accommodating a torque transmitting ball (14, 34, 54), and further having a cage (7, 27, 47) which accommodates the balls in circumferentially distributed windows (15, 35, 55), holds same in a common plane and, upon articulation of the axes of the outer joint part and inner joint part relative to one another, guides the balls on to the angle bisecting plane, with the outer joint part (1, 21, 41) being produced with axially undercut-free inner surfaces (5, 25, 45) between the individual ball tracks (13, 33, 53) and with at least three securing elements (9, 19, 29, 49) for the cage (7, 27, 47) in the outer joint part (1, 21, 41) being inserted between two ball tracks and connected to the outer joint part respectively, said securing elements forming cage contact or cage guiding faces (16, 36, 56) acting against an axial movement of the cage (7, 27, 47) out of the outer joint part (1, 21, 41), with the balls being able to pass between the securing elements, characterised in
that the securing elements are provided in the form of wedges which, independently of one another, are axially inserted into the annular gap between the outer joint part (1, 21, 41) and the outer surface (8, 28, 48) of the cage (7, 27, 47) and welded to the outer joint part (1, 21, 41) and which, in contact points A, hold the cage (7, 27, 47) with a set axial play in the outer joint part (1, 21, 41).

2. A joint according to claim 1,
characterised in
that the radii of curvature of the tracks (6, 26, 46, 13, 33, 53) are provided with a respective axial offset relative to a plane $E_K$ comprising the ball centres with the joint being in its aligned position and that the offset $O_1$ of the inner joint part (11, 31, 51) is permitted to deviate from the offset $O_2$ of the outer joint part (1, 21, 41).

3. A joint according to claim 1 or 2,
characterised in
that the inner surface (5) between the tracks (6) in the outer joint part (1) forms cage contact or cage guiding faces against which the cage (7), in contact points E, is axially inwardly supported in the outer joint part (1) (Figs. 1 to 16).

4. A joint according to claim 3,
characterised in
that the inner joint part (11), by means of its outer surface (12), is supported axially inwardly in the outer joint part (1) on the inner surface (10) of the cage (7) and that, by means of its tracks (6, 13), it is supported axially outwardly in the outer joint part (1) on the balls (14) and thus, indirectly, by means of balls and cage and by means of the securing elements (9).

5. A joint according to claim 3,
characterised in
that the inner joint part (11) is supported axially inwardly and outwardly in the outer joint part (1) by means of its outer surface (12) on the inner surface (10) of the cage (7) and thus indirectly by means of the cage.

6. A joint according to any one of claims 3 to 5,
characterised in
that, with the cage (7) being held clearance-free in the outer joint part (1), the balls (14) are held nearly radially clearance-free in the tracks (6, 13) in the outer joint part (1) and in the inner joint part (11).

7. A joint according to any one of claims 3 to 6,
characterised in
that the centres $M_1$, $M_2$ of the cage contact or cage guiding faces (16, 5) on the securing elements (9) and in the outer joint part (1) are axially offset in opposite directions relative to a plane comprising the ball centres, with the joint being in its aligned position and that their radii $R_1$, $R_2$ are each greater than the radius R of the outer surface (8) of the cage (7).

8. A joint according to claim 1 or 2,
characterised in
that the inner surface (25, 45) between the tracks (26, 46) in the outer joint part (21, 41) features a radial play $S_3$ relative to the outer surface (28, 48) of the cage (27, 47), that the inner surface (30, 50) of the cage (27, 47) is in contact with outer surfaces (32, 52) of the inner joint part (31, 51) in contact points D positioned between the tracks (33, 53) and that the cage (27, 47), by means of the cage windows (35, 55) and in contact points B on the flanks adjacent to the aperture (24, 44) of the outer joint part (21, 41), is supported axially inwardly on the balls (35, 54) which, in turn, are supported in contact points $C_1$, $C_2$ in the tracks of the outer joint part (21, 41) and of the inner joint part (31, 51) (Figs. 17 to 20).

9. A joint according to claim 8,
characterised in
that between the inner surface (30, 50) of the cage (27, 47) and the outer surface (32, 52) of the inner joint part (31, 51), at the end positioned towards the aperture (24, 44) of the outer joint part (21, 41), there is provided a radial play $S_1$.

10. A joint according to any one of claims 8 or 9,
characterised in
that when the balls (34, 54) contact the contact points $C_1$, $C_2$ in the tracks (26, 46, 33, 53) and the contact points B on the flanks of the cage windows (35, 55) adjacent to the aperture (24, 44) of the outer joint part (21, 41), they feature an axial play $S_2$ relative to the flanks of the cage windows (35, 55) adjacent to the inner face of the outer joint part (21, 41).

11. A joint according to any one of claims 1 to 10,
characterised in
that in the region of a plane $E_K$ comprising the ball centres with the joint being in its aligned position and in a region extending beyond said plane into the interior of the outer joint part (1, 21, 41), the inner surface (5, 25, 45) of the outer joint part (1, 21, 41) comprises an inner cylindrical portion Z.

12. A joint according to any one of claims 1 to 10,
characterised in
that the outer joint part (1, 21, 41) is provided with recesses (17, 18, 37, 57) which are form-fittingly engaged by the securing elements (9, 19, 29, 49) in the circumferential direction.

13. A joint according to claim 12,
characterised in
that the recesses (17, 18, 28, 57) permit an axial and/or radial displacement of the securing elements (9, 19, 29, 49) therein before the securing elements (9, 19, 29, 49) are connected to the outer joint part (1, 21, 41).

14. A joint according to any one of claims 1 to 13,
characterised in
that the radius of the cage contact and guiding faces (16, 36, 56) of the securing elements (9, 29, 49) is greater than the radius of the outer surface (8, 28, 48) of the cage (7, 27, 47), especially infinitely great.

15. A joint according to any one of claims 1 to 14,
characterised in
that the outer joint part (41) is a formed plate metal part with a substantially constant wall thickness.

16. A method of producing a joint according to any one of claims 1 to 15,
characterised in
that a pre-assembled assembly consisting of the inner joint part (11, 31, 51), the cage (7, 27, 47) and balls (14, 34, 54) in their predetermined functional position and, with their axes extending coaxially relative to one another, is coaxially inserted into the outer joint part (1, 21, 41) and that subsequently the securing elements (9, 29, 49) are inserted and welded to the outer joint part (1, 21, 41).

17. A method according to claim 16,
characterised in

EP 0 577 830 B1

that with an axially fixed outer joint part (1, 21, 41), the securing elements (9, 29, 49) are made to stop axially against the cage (7, 27, 47) which is directly or indirectly supported on the outer joint part (1, 21, 41), and welded to the outer joint part (1, 21, 41) in that position.

**18.** A method according to claim 16,
characterised in
that with an axially fixed outer joint part (1, 21, 41), the securing elements (9, 29, 49) are made to stop axially against the cage (7, 27, 47) which is directly or indirectly supported on the outer joint part (1, 21, 41), are axially withdrawn by a defined amount relative to the axially held outer joint part (1, 21, 41) and welded to the outer joint part (1, 21, 41) in that position.

**Revendications**

**1.** Joint homocinétique à billes, comprenant une partie extérieure (1, 21, 41) avec des rainures à billes (6, 26, 46) réparties en périphérie et s'étendant sensiblement longitudinalement, une partie intérieure (11, 31, 51) avec des rainures à billes (13, 33, 53) réparties en périphérie et s'étendant sensiblement longitudinalement, réalisées de préférence sans contre-dépouille, les rainures étant situées par paires les unes radialement en vis-à-vis des autres et recevant conjointement une bille respective (14, 34, 54) qui transmet le couple de rotation, ainsi qu'une cage (7, 27, 47) qui reçoit les billes dans des fenêtres (15, 35, 55) réparties en périphérie, qui les maintient dans un plan commun et qui les amène dans un plan bissecteur lorsque les axes de la partie extérieure et de la partie intérieure fléchissent l'un vers l'autre, la partie extérieure (1, 21, 41) étant réalisée avec des surfaces intérieures (5, 25, 45) sans contre-dépouille, vues en direction axiale, entre les rainures à billes individuelles (13, 33, 53), et dans lequel au moins trois éléments de blocage (9, 19, 29, 49) pour la cage (7, 27, 47) sont mis en place dans la partie extérieure (1, 21, 41) respectivement entre deux rainures à billes, et ces éléments de blocage sont reliés à la partie extérieure et forment des surfaces (16, 36, 56) d'appui ou de guidage de la cage, et agissent à l'encontre d'un mouvement axial de la cage (7, 27, 47) hors de la partie extérieure (1, 21, 41), les billes pouvant se déplacer en traversant entre les éléments de blocage,
caractérisé en ce que
les éléments de blocage sont des coins soudés avec la partie extérieure (1, 21, 41) et mis en place indépendamment les uns des autres axialement dans la fente annulaire entre la partie extérieure (1, 21, 41) et la surface extérieure (8, 28, 48) de la cage (7, 27, 47), qui maintiennent la cage (7, 27, 47) via des emplacements de contact A avec un jeu axial ajusté dans la partie extérieure (1, 21, 41).

**2.** Joint selon la revendication 1,
caractérisé en ce que
les rayons de courbure des rainures (6, 26, 46, 13, 33, 53) présentent un décalage axial par rapport à un plan $E_K$ à travers les centres des billes lorsque le joint est aligné, le décalage $O_1$ de la partie intérieure (11, 31, 51) pouvant s'écarter de façon admissible du décalage $O_2$ de la partie extérieure (1, 21, 41).

**3.** Joint selon l'une ou l'autre des revendications 1 et 2,
caractérisé en ce que
la surface intérieure (5) forme entre les rainures (6) dans la partie extérieure (1) des surfaces d'appui ou de guidage de la cage, contre lesquelles s'appuie la cage (7) à des emplacements de contact E axialement vers l'intérieur dans la partie extérieure (1). (Figs. 1 à 16).

**4.** Joint selon la revendication 3,
caractérisé en ce que la partie intérieure (11) s'appuie axialement vers l'intérieur dans la partie extérieure (1) via sa surface extérieure (12) contre la surface intérieure (10) de la cage (7), et axialement vers l'extérieur dans la partie extérieure (1) via ses rainures (6, 13) contre les billes (14) et ainsi indirectement via les billes et la cage et via les éléments de blocage (9).

**5.** Joint selon la revendication 3,
caractérisé en ce que
la partie intérieure (11) s'appuie axialement vers l'intérieur et vers l'extérieur dans la partie extérieure (1) respectivement via sa surface extérieure (12) contre la surface intérieure (10) de la cage (7) et ainsi indirectement via la cage.

6. Joint selon l'une quelconque des revendications 3 à 5,
caractérisé en ce que
lorsque la cage (7) est maintenue sans jeu dans la partie extérieure (1), les billes (14) sont maintenues pratiquement radialement sans jeu dans les rainures (6, 13) dans la partie extérieure (1) et dans la partie intérieure (11).

7. Joint selon l'une quelconque des revendications 3 à 6,
caractérisé en ce que
les centres $M_1$, $M_2$ des surfaces (16, 5) d'appui ou de guidage de la cage sur les éléments de blocage (9) et dans la partie extérieure (1) sont décalés axialement à l'opposé l'un de l'autre par rapport à un plan qui passe par les centres des billes, lorsque le joint est aligné, et leurs rayons $R_1$, $R_2$ sont chacun supérieurs au rayon R de la surface extérieure (8) de la cage (7).

8. Joint selon l'une ou l'autre des revendications 1 et 2,
caractérisé en ce que
la surface intérieure (25, 45) entre les rainures (26, 46) dans la partie extérieure (21, 41) présente un jeu radial $S_3$ par rapport à la surface extérieure (28, 48) de la cage (27, 47), en ce que la surface intérieure (30, 50) de la cage (27, 47) se trouve en contact par des surfaces extérieures (32, 52) situées entre les rainures (33, 53) de la partie intérieure (31, 51), à des emplacements de contact D, et en ce que la cage (27, 47) s'appuie, via les fenêtres de cage (35, 55) à des emplacements de contact B sur les flancs situés vers l'ouverture (24, 44) de la partie extérieure (21, 41), axialement vers l'intérieur contre les billes (34, 54) qui s'appuient à leur tour à des emplacements de contact $C_1$, $C_2$ dans les rainures à billes de la partie extérieure (21, 41) et de la partie intérieure (31, 51), (figs. 17 à 20).

9. Joint selon la revendication 8,
caractérisé en ce que
il est prévu un jeu radial $S_1$ entre la surface intérieure (30, 50) de la cage (27, 47) et la surface extérieure (32, 52) de la partie intérieure (31, 51) sur le côté situé vers l'ouverture (24, 44) de la partie extérieure (21, 41).

10. Joint selon l'une ou l'autre des revendications 8 et 9,
caractérisé en ce que
lors de l'appui des billes (34, 54) contre les emplacements de contact $C_1$, $C_2$ dans les rainures (26, 46, 33, 53), et contre les points de contact B sur les flancs des fenêtres de cage (35, 55), ces flancs étant situés vers l'ouverture (24, 44) de la partie extérieure (21, 41), il existe un jeu axial $S_2$ par rapport aux flancs des fenêtres de cage (35, 55), qui sont situés vers la face intérieure de la partie extérieure (21, 41).

11. Joint selon l'une quelconque des revendications 1 à 10,
caractérisé en ce que
la surface intérieure (5, 25, 45) de la partie extérieure (1, 21, 41) présente un tronçon cylindrique intérieur (Z), dans la région d'un plan $E_K$ passant par les centres des billes et lorsque le joint est aligné au-delà de ce plan dans l'intérieur de la partie extérieure (1, 21, 41).

12. Joint selon l'une quelconque des revendications 1 à 10,
caractérisé en ce que
il est prévu dans la partie extérieure (1, 21, 41) des évidements (17, 18, 37, 57) dans lesquels s'engagent les éléments de blocage (9, 19, 29, 49) en direction périphérique par coopération de formes.

13. Joint selon la revendication 12,
caractérisé en ce que
les évidements (17, 18, 27, 57) permettent en eux-mêmes un déplacement axial et/ou radial des éléments de blocage (9, 19, 29, 49) avant la liaison des éléments de blocage (9, 19, 29, 49) avec la partie extérieure (1, 21, 41).

14. Joint selon l'une quelconque des revendications 1 à 13,
caractérisé en ce que
le rayon des surfaces (16, 36, 56) d'appui ou de guidage de la cage des éléments de blocage (9, 29, 49) est supérieur au rayon de la surface extérieure (8, 28, 48) de la cage (7, 27, 47), en particulier qu'il est infiniment grand.

**15.** Joint selon l'une quelconque des revendications 1 à 14,
caractérisé en ce que
la partie extérieure (41) est une pièce formée en tôle ayant une épaisseur de paroi sensiblement constante.

**16.** Procédé pour la réalisation d'un joint selon l'une quelconque des revendications 1 à 15,
caractérisé en ce que
un agencement prémonté, constitué par la partie intérieure (11, 31, 51), par la cage (7, 27, 47), et par les billes (14, 34, 54) dans leur position déterminée fonctionnelle, est introduit avec des axes coaxiaux les uns aux autres coaxialement dans la partie extérieure (1, 21, 41), et ensuite les éléments de blocage (9, 29, 49) sont mis en place et soudés avec la partie extérieure (1, 21, 41).

**17.** Procédé selon la revendication 16,
caractérisé en ce que
lorsque la partie extérieure (1, 21, 41) est maintenue axialement fixe, les éléments de blocage (9, 29, 49) sont amenés axialement en butée contre la cage (7, 27, 47) qui s'appuie directement ou indirectement contre la partie extérieure (1, 21, 41), et sont soudés dans cette position avec la partie extérieure (1, 21, 41).

**18.** Procédé selon la revendication 16,
caractérisé en ce que
lorsque la partie extérieure (1, 21, 41) est maintenue axialement fixe, les éléments de blocage (9, 29, 49) sont amenés axialement en butée contre la cage (7, 27, 47) qui s'appuie directement ou indirectement contre la partie extérieure (1, 21, 41), en ce qu'ils sont reculés axialement d'une valeur définie par rapport à la partie extérieure (1, 21, 41) maintenue axialement, et en ce qu'ils sont soudés dans cette position avec la partie extérieure (1, 21, 41).

Fig.1

Fig.2

Fig. 2a

7a  6a  8a  1a  9a  16a  17a  11a  13a  14a

Fig. 3

1a  5a  10a  11a  12a  9a  16a  17a  4a

Fig. 4

EP 0 577 830 B1

7b 6b 8b 1b 9b 16b 17b 11b 13b 14b

**Fig. 5**

1b 5b 10b 11b 12b 9b 16b 17b 4b

**Fig.6**

Fig.8

Fig.7

7d 6d 8d 1d 9d 16d 17d 11d 13d 14d

Fig.9

1d 5d 10d 11d 12d 9d 16d 17d 4d

Fig.10

7e 6e 8e 1e 9e 16e 17e 11e 13e 14e

**Fig. 11**

1e 5e 10e 11e 12e 9e 16e 17e 4e

**Fig. 12**

Fig. 14

Fig. 13

7g  6g  8g  1g  9g  16g  17g  11g  13g  14g

Fig. 15

1g  5g  10g  11g  12g  9g  16g  17g  4g

Fig. 16

Fig.18

Fig.17

Fig. 20

Fig. 19